# EUROPÄISCHE PATENTSCHRIFT

(11) **EP 0 360 345 B1**
(45) Veröffentlichungstag und Bekanntmachung des Hinweises auf die Patenterteilung: **21.12.1994**
(21) Anmeldenummer: 89202349.0
(22) Anmeldetag: 18.09.1989
(51) Int. Cl.: G06K 7/06

(54) **Abtastgerät für eine Chipkarte**
Reading apparatus for a chip card
Dispositif de lecture pour carte à puce

(30) Priorität: 23.09.1988 AT 2364/88
(43) Veröffentlichungstag der Anmeldung: 28.03.1990
(73) Patentinhaber: Philips Electronics N.V., 5621 BA Eindhoven (NL)
(72) Erfinder: Weihs, Hans, NL-5656 AA Eindhoven (NL)
(74) Vertreter: Cuppens, Hubertus Martinus Maria

(56) Entgegenhaltungen:
- EP-A- 0 041 261
- EP-A- 0 234 654
- EP-A- 0 254 316
- DE-A- 3 313 802
- FR-A- 2 599 530
- GB-A- 2 198 595
- US-A- 4 810 203

## Beschreibung

Die Erfindung betrifft ein Abtastgerät für eine Chipkarte, das einen feststehend angeordneten Kontaktsatz aufweist, an den eine in eine verstellbare Aufnahmevorrichtung eingebrachte Chipkarte heranführbar ist, wodurch der Kontaktsatz an der Chipkarte vorgesehene Kontakte kontaktiert, wobei die Aufnahmevorrichtung als niveaumäßig verstellbare Lade ausgebildet ist, in die in ihrer aus dem Gerät herausgezogenen Lage die Chipkarte in einen durch Anschläge begrenzten Aufnahmeraum innerhalb der Lade einlegbar ist, in dem sie innerhalb der Lade niveaumäßig in Abstand zum Niveau des Kontaktsatzes liegt, und wobei für das Verstellen der Lade beidseitig mit derselben zusammenwirkenden Kulissenführungen vorgesehen sind, welche die Lade beim Einschieben in das Gerät im Bereich des Kontaksatzes stutenförmig zu dessen Niveau hin verstellen.

Ein derartiges Abtastgerät ist bekannt aus der GB-A- 2 198 595. Bei diesem bekannten Abtastgerät ist die Chipkarte von Hand aus einlegbar in einen verschiebbaren Träger. An einem Ende dieses Trägers ist eine Federeinrichtung vorgesehen, die mit einem Randbereich der in den Träger eingelegten Chipkarte zusammenwirkt und diese mit ihrem gegenüberliegenden Randbereich gegen einen Anschlag am Träger angelegt hält. Durch die niveaumäßige Verstellung des Trägers beim Einschieben in das Abtastgerät wird die in den Träger eingelegte Chipkarte mit den an ihr vorgesehenen Kontakten an den Kontaktsatz herangeführt, wodurch eine einwandfreie und sichere Kontaktgabe gewährleistet ist. Ein Nachteil dieses bekannten Abtastgerätes ist, daß die Chipkarte nach dem Herausziehen des Trägers aus dem Gerät nur mit Mühe dem Träger entnommen werden kann.

Die Erfindung hat sich zum Ziel gesetzt, diesen Nachteil bei einem Abtastgerät der eingangs angeführten Gattung auf konstruktiv besonders einfache Art und Weise und bei besonderer Bedienungsfreundlichkeit zu vermeiden.

Erfindungsgemäß ist hierzu vorgesehen, daß am Gerät in der Einschubrichtung gesehen seitlich neben dem Aufnahmeraum verlaufend je ein im wesentlichen in einen vom Kontaktsatz abgewandten Bereich der Lade in diese ragender, quer zur Einschubrichtung federnder Haken vorgesehen ist, der an seinem freien Ende eine Auflauffläche zum Zusammenwirken mit dem betreffenden seitlichen Randbereich einer Chipkarte aufweist, wobei im Zuge eines Einschiebens der Lade in das Gerät bei ihrem stufenförmigen Verstellen zum Niveau des Kontaktsatzes hin eine in den Aufnahmeraum innerhalb der Lade eingelegte Chipkarte in die Haken einfällt und im Zuge eines Herausziehens der Lade aus dem Gerät bei ihrem stufenförmigen Verstellen vom Niveau des Kontaktsatzes weg die Chipkarte von den Haken im Niveau des Kontaktsatzes gehalten und dabei aus dem Aufnahmeraum innerhalb der Lade zumindest teilweise herausgehoben wird. Auf diese Weise wird erreicht, daß nach einem Herausziehen der Lade aus dem Gerät die dabei etwas mit ihrem vom Kontaktsatz abgewandten Bereich aus dem Aufnahmeraum herausgehobene Chipkarte leicht von Hand erfaßt und der Lade entnommen werden kann.

Als vorteilhaft hat sich erwiesen, wenn zwei den Aufnahmeraum in der Einschubrichtung gesehen seitlich begrenzende Anschläge durch vom dem Kontaktsatz zugewandten Bereich der Lade ausgehende, entlang mindestens eines Abschnittes des Aufnahmeraumes verlaufende Führungsrippen für eine in den Aufnahmeraum innerhalb der Lade einzulegende Chipkarte gebildet sind, die in dem Kontaktsatz zugewandten Bereich der Lade abschnittsweise mit den Aufnahmeraum übergreifenden Leisten versehen sind. Auf diese Weise wird ein sicheres und einfaches Einlegen einer Chipkarte in den Aufnahmeraum innerhalb der Lade erreicht, wobei die Leisten auch dafür sorgen, daß die Chipkarte sich insbesondere in dem Kontaktsatz zugewandten Bereich nicht vom Boden des Aufnahmeraumes innerhalb der Lade abheben kann.

In diesem Zusammenhang hat sich weiters als vorteilhaft erwiesen, wenn mindestens die dem Aufnahmeraum zugewandten Begrenzungsflächen der Leisten entgegen der Einschubrichtung gesehen mindestens abschittsweise vom Aufnahmeraum weg schräg ansteigend ausgebildet sind. Auf diese Weise wird ein leicht schräg verlaufendes Einlegen einer Chipkarte in den Aufnahmeraum innerhalb der Lade ermöglicht, was diesen Vorgang besonders einfach gestaltet. Entsprechendes gilt auch für das Entnehmen einer Chipkarte aus dem Aufnahmeraum innerhalb der Lade.

Weiters hat sich als vorteilhaft erwiesen, wenn mit einer in den Aufnahmeraum innerhalb der Lade eingelegten Chipkarte eine an der Lade vorgesehene Federeinrichtung zusammenwirkt, welche die Chipkarte entgegen der Einschubrichtung belastet und gegen mindestens einen den Aufnahmeraum innerhalb der Lade in der zur Einschubrichtung entgegengesetzten Richtung begrenzenden Anschlag angelegt hält, von welchem sich die Chipkarte im Zuge eines Herausziehens der Lade aus dem Gerät durch die sie dabei im Niveau des Kontaktsatzes haltenden Haken löst und unter der Wirkung der Federeinrichtung entgegen der Einschubrichtung teilweise aus der Lade herausgeschoben wird. Durch diese Maßnahme wird sogar erreicht, daß bei einem Herausziehen der Lade aus dem Gerät eine sich im Aufnahmeraum der Lade befindende Chipkarte automatisch etwas aus der Lade herausgeschoben wird, so daß sie besonders leicht von Hand aus ergriffen und der Lade dann vollständig entnommen werden kann.

Als vorteilhaft hat sich auch erwiesen, wenn die in das Gerät eingeschobene Lade durch eine geräteseitige Haltevorrichtung festgehalten ist, von der sie durch Betätigung eines geräteseitig angeordneten Bedienungsorganes her lösbar ist. Auf diese Weise ist erreicht, daß die Lade aus dem Gerät erst herausgezogen werden kann, wenn vorher bewußt das betreffende Bedienungsorgan betätigt wird. Hiedurch ist sichergestellt, daß die Lade nicht durch eine unbewußte Handhabung aus dem Gerät herausgezogen werden kann.

In diesem Zusammenhang hat sich weiters als vorteilhaft erwiesen, wenn das Bedienungsorgan durch den elektrischen Ein- und Ausschalter des Gerätes gebildet ist, wobei das Lösen der Lade von der Haltevorrichtung durch eine weitere Betätigung des Ein- und Ausschalters nach dem elektrischen Ausschalten des Gerätes erfolgt. Hiedurch ist sichergestellt, daß die Lade erst tatsächlich nach dem elektrischen Ausschalten des Abtastgerätes aus demselben herausgezogen werden kann, wodurch bekanntlich mit Sicherheit eine allfällige Beschädigung der in der Chipkarte enthaltenen elektronischen Bauelemente vermieden wird.

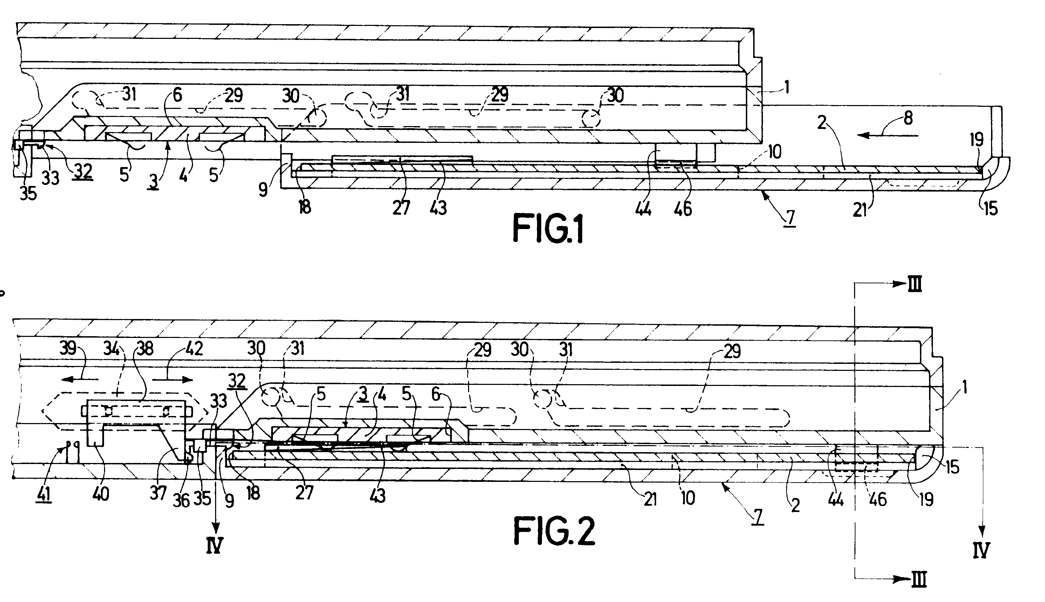

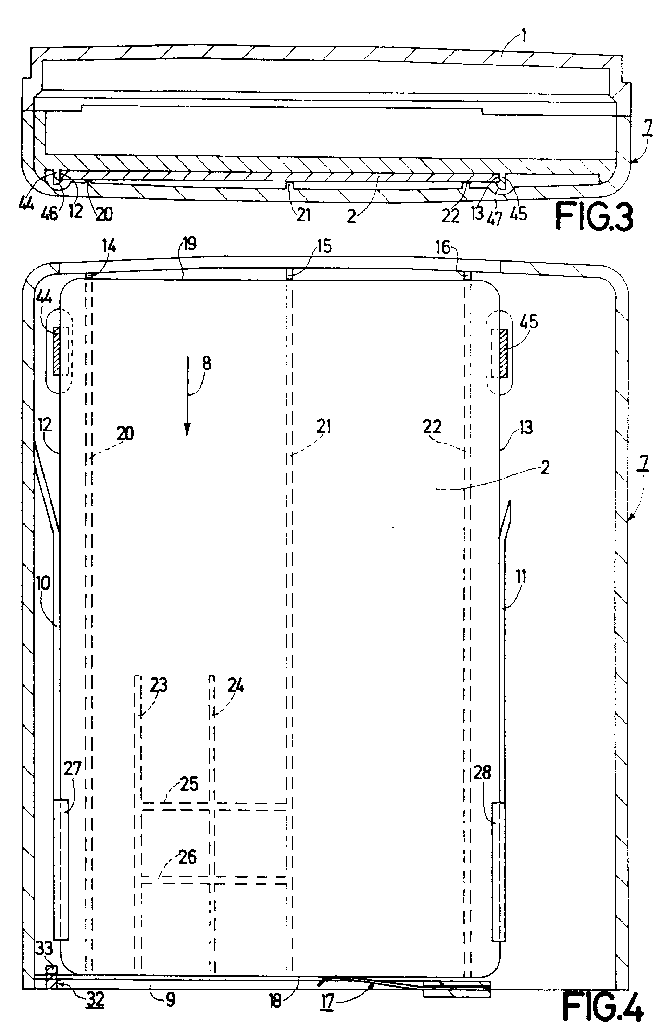

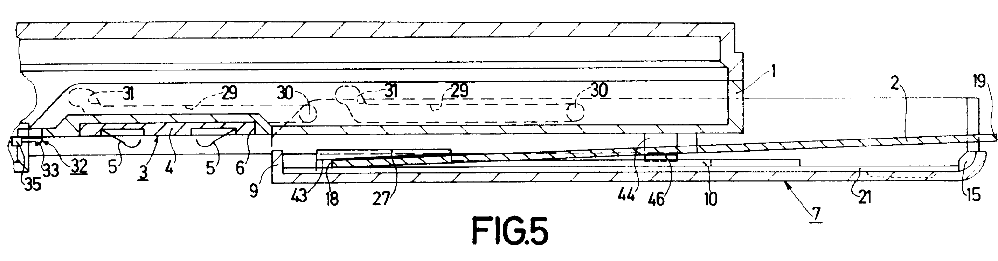

Die Erfindung wird im folgenden anhand der Zeichnungen, in welchen ein Ausführungsbeispiel der Erfindung dargestellt ist, auf welches sie jedoch nicht beschränkt sein soll, näher erläutert. Fig.1 zeigt abschnittsweise ein Abtastgerät im Längsschnitt mit aus demselben herausgezogener Lade, in die eine Chipkarte eingelegt ist. Fig.2 zeigt das Gerät nach Fig.1 mit in dasselbe hineingeschobener Lade. Fig.3 zeigt einen Schnitt nach der Linie III-III in Fig.2. Fig.4 zeigt einen Schnitt nach der Linie IV-IV in Fig.2, der durch die Lade geführt ist. Fig.5 zeigt in der Darstellungsweise von Fig.1 das Abtastgerät nach Fig.2, wobei die Lade wieder aus dem Abtastgerät herausgezogen und die Chipkarte zum Entnehmen aus der Lade bereit ist.

In den Figuren ist mit 1 das Gehäuse eines Abtastgerätes für eine Chipkarte 2 bezeichnet. In derartigen Chipkarten sind in üblicher Weise elektronische Bauelemente untergebracht, wie beispielsweise Speicher zur Speicherung von Daten in digitaler Form. Um eine solche Chipkarte in Betrieb nehmen zu können, sind beispielsweise an einer Hauptfläche derselben hier nicht näher dargestellte Kontakte vorgesehen, die mit der elektrischen Schaltung innerhalb der Chipkarte in Verbindung stehen. Beim Einführen einer Chipkarte in das Abtastgerät tritt mit den Kontakten an der Chipkarte ein im Gerät untergebrachter Kontaktsatz 3 in Verbindung, wodurch elektrische Verbindungen zwischen dem Abtastgerät und der Chipkarte hergestellt werden, und so die Chipkarte in Betrieb genommen werden kann.

Im vorliegenden Fall besteht der Kontaktsatz 3 aus einem Träger 4, an dem Kontaktfahnen 5 befestigt sind, von welchen hier zwei sichtbar sind. Dieser Kontaktsatz 3 ist mit seinem Träger 4 am Abtastgerät feststehend angeordnet, wozu er beispielsweise in eine Ausnehmung 6 des Gehäuses 1 des Gerätes eingesetzt ist. Ein derart geräteseitig feststehend angeordneter Kontaktsatz 3 bietet den Vorteil, daß keine flexiblen Leitungsverbindungen zu ihm erforderlich sind, die im Zuge des Betriebes des Gerätes Biegebeanspruchungen ausgesetzt sind, wie dies bei einem im Gerät verstellbar angeordneten Kontaktsatz der Fall wäre.

Zum Einführen einer Chipkarte 2 in das Abtastgerät, wobei die Kontaktierung der an der Chipkarte vorgesehenen Kontakte durch den geräteseitigen Kontaktsatz 3 erfolgt, ist hier eine aus dem Abtastgerät herausziehbare Lade 7 vorgesehen, in welche eine Chipkarte 2 von Hand aus einlegbar ist, wie dies Fig.1 zeigt. Die Chipkarte 2 ist hiebei in einen durch Anschläge begrenzten Aufnahmeraum innerhalb der Lade 7 einlegbar, wie dies insbesondere aus Fig.4 zu entnehmen ist. Im vorliegenden Fall sind zwei in der mit 8 durch einen Pfeil bezeichneten Einschubrichtung der Lade 7 beziehungsweise der Chipkarte 2 in das Gerät gesehen seitlich den Aufnahmeraum begrenzende Anschläge durch vom dem Kontaktsatz 3 zugewandten Bereich der Lade, demnach von dem Ende 9 der Lade 7 ausgehende, entlang eines Abschnittes des Aufnahmeraumes verlaufende Führungsrippen 10 und 11 gebildet, welche die Chipkarte beim Einlegen in den Aufnahmeraum entlang ihrer seitlichen Randbereiche 12 und 13 führen. Drei als Vorsprünge ausgebildete Anschläge 14, 15 und 16 begrenzen den Aufnahmeraum in der zur Einschubrichtung 8 entgegengesetzten Richtung. In der Einschubrichtung 8 gesehen ist der Aufnahmeraum durch das Ende 9 der Lade 7 begrenzt, wobei im vorliegenden Fall an diesem Ende 9 der Lade zu dieser Begrenzung des Aufnahmeraumes eine durch eine Blattfeder gebildete Federeinrichtung 17 vorgesehen ist, die mit dem betreffenden Randbereich 18 einer in den Aufnahmeraum innerhalb der Lade eingelegten Chipkarte 2 zusammenwirkt und diese mit ihrem gegenüberliegenden Randbereich 19 gegen die Anschläge 14, 15 und 16 angelegt hält. Damit die Chipkarte 2 nicht großflächig am Boden der Lade 7 aufliegt, was zu unbestimmten Auflageverhältnissen Anlaß geben könnte, sind im Bereich des Aufnahmeraumes innerhalb der Lade 7 am Boden derselben beispielsweise leistenförmige Erhebungen 20 bis 26 vorgesehen, auf welchen die Chipkarte dann einwandfrei mit einer ihrer Hauptflächen aufliegt, wobei insbesondere der Bereich der einen Hauptfläche der Chipkarte, welcher dem die Kontakte aufweisenden Bereich der anderen Hauptfläche gegenüberliegt, sicher unterstützt wird, was im vorliegenden Fall durch die leistenförmigen Erhebungen 23 bis 26 geschieht. Schließlich sind die Führungsrippen 10 und 11 im dem Kontaktsatz zugewandten Bereich der Lade abschnittsweise mit den Aufnahmeraum übergreifenden Leisten 27 und 28 versehen, wodurch der Aufnahmeraum für eine Chipkarte 2 innerhalb der Lade 7 vollständig definiert ist, in den dann eine Chipkarte einfach von Hand aus eingelegt beziehungsweise eingeführt werden kann.

Wie aus Fig.1 ersichtlich ist, befindet sich eine in den Aufnahmeraum innerhalb der aus dem Abtastgerät herausgezogenen Lade 7 eingelegte Chipkarte 2 gegenüber dem Abtastgerät als solches auf einem Niveau, das in Abstand zum Niveau des Kontaktsatzes 3 liegt. Zur Führung der Lade beim Einschieben derselben in das Abtastgerät sind mit der Lade 7 beidseitig zusammenwirkende Kulissenführungen vorgesehen, die beispielsweise als paarweise hintereinanderliegende, beidseitig im Gerätegehäuse 1 vorgesehene Schlitze 29 ausgebildet sein können, in die an der Lade 7 seitlich vorgesehene Zapfen 30 eingreifen. Diese Kulissenführungen 29, 30 sind nun durch die Formgebung ihrer Schlitze 29 so ausgebildet, daß die Lade 7 beim Einschieben in das Gerät im Bereich des Kontaktsatzes 3 stufenförmig zu dessen Niveau hin verstellt wird, was durch die im Verlauf der Schlitze 29 vorgesehenen niveaumäßigen Stufen 31 erfolgt. Durch diese niveaumäßige Verstellung der Lade 7 beim Einschieben in das Abtastgerät wird die in ihren Aufnahmeraum eingelegte Chipkarte 2 mit den an ihr vorgesehenen Kontakten an den geräteseitig feststehenden Kontaktsatz 3 herangeführt, wobei im letzten Abschnitt dieses Bewegungsablaufes eine schleifende Kontaktierung der an der Chipkarte 2 vorgesehenen Kontakte durch den Kontaktsatz 3 erfolgt, wodurch bekanntlich eine einwandfreie und sichere Kontaktgabe gewährleistet ist. Für die Ausbildung der mit der Lade zusammenwirkenden Kulissenführungen an sich bestehen im Rahmen des hiefür bekannten Standes der Technik selbstverständlich auch noch andere Möglichkeiten.

In der in das Abtastgerät eingeschobenen Lage der Lade 7, wie dies Fig.2 zeigt, wird die Lade 7 durch eine geräteseitige Haltevorrichtung 32 festgehalten, die im vorliegenden Fall einfach durch einen federnden Haken 33 gebildet ist, der im Bereich des Endes 9 der Lade 7 in diese einfällt, wodurch die Lade sicher in der Betriebslage für die Chipkarte festgehalten wird und nicht ungewollt aus dem Abtastgerät herausgezogen werden kann. Von dieser Haltevorrichtung 32 ist die Lade 7 nur durch die Betätigung eines geräteseitig angeordneten, hier als Schieber ausgebildeten Bedienungsorganes 34 her lösbar, so daß eine bewußte Handlung zu setzen ist, um die Lade 7 wieder aus dem Gerät herausziehen zu können. Im vorliegenden Fall ist hiezu am Haken 33 ein Ansatz 35 vorgesehen, mit dem ein schräg verlaufender Ansatz 36, der an einem Arm 37 eines mit dem Bedienungsorgan 34 in Verbindung stehenden Führungsteiles 38 für dasselbe angebracht ist, bei der Verstellung des Bedienungsorgans 34 zusammenwirkt, wodurch der Haken 33 angehoben und damit die Lade 7 zum Herausziehen aus dem Abastgerät freigegeben wird. Beim vorliegenden Ausführungsbeispiel ist das Bedienungsorgan 34 durch den elektrischen Ein- und Ausschalter des Abtastgerätes gebildet, wobei das Lösen der Lade 7 von der Haltevorrichtung 32 durch eine weitere Betätigung des Ein- und Ausschalters nach dem elektrischen Ausschalten des Gerätes erfolgt. In der in Fig.2 gezeigten Lage des Bedienungsorgans 34 ist das Abtastgerät elektrisch ausgeschaltet. Wird das Bedienungsorgan 34 aus dieser Ausschaltlage heraus in der Richtung des Pfeiles 39 verstellt, so wird hiebei über einen weiteren am Führungsteil 38 vorgesehenen Arm 40 ein Kontaktpaar 41 geschlossen, welches das Gerät elektrisch einschaltet. Wird hingegen das Bedienungsorgan 34 aus der Ausschaltlage heraus in Richtung des Pfeiles 42 verstellt, so wird über den schräg verlaufenden Ansatz 36, durch dessen Zusammenwirken mit dem am Haken 33 vorgesehenen Ansatz 35, die Lade 7 von der Haltevorrichtung 32 gelöst. Somit kann die Lade 7 erst, nachdem das Abtastgerät elektrisch ausgeschaltet wurde, aus demselben herausgezogen werden, wodurch sichergestellt ist, daß die in der Chipkarte untergebrachten elektronischen Bauteile nicht durch elektrische Vorgänge beschädigt werden können. Selbstverständlich kann die Haltevorrichtung 32 auch noch anders als durch einen Haken 33 ausgebildet sein, um die vorstehend angeführte Funktionsweise zu erreichen. So kann die Haltevorrichtung beispielsweise auch durch einen Magnet gebildet sein, der die Lade über einen an ihr vorgesehenen Magnetanker magnetisch festhält, wobei dann die Lade mit einem an einem geräteseitigen Bedienungsorgan vorgesehenen Stößel wieder vom Magnet beziehungsweise der Magnet von der Lade abgehoben und so die Lade von der Haltevorrichtung gelöst werden kann.

Beim vorliegenden Ausführungsbeispiel sind die an den Führungsrippen 10 und 11 vorgesehenen, den Aufnahmeraum übergreifenden Leisten 27 und 28 mit dem Aufnahmeraum zugewandten Begrenzungsflächen versehen, welche entgegen der Einschubrichtung 8 gesehen vom Aufnahmeraum weg schräg ansteigend ausgebildet sind. In den Figuren 1, 2 und 5 ist bei der Leiste 27 die betreffende schräg verlaufende Begrenzungsfläche sichtbar, die mit 43 bezeichnet ist. Hiedurch ist es möglich, eine Chipkarte auch leicht schräg verlaufend in den Aufnahmeraum innerhalb der Lade 7 einzulegen beziehungsweise aus dem Aufnahmeraum zu entnehmen. Selbstverständlich wäre es auch möglich, die Leisten 27 und 28 als solche entgegen der Einschubrichtung 8 gesehen vom Aufnahmeraum weg schräg ansteigend an den Führungsrippen 10 und 11 anzuordnen.

Weiters ist beim vorliegenden Ausführungsbeispiel am Gerät in der Einschubrichtung 8 gesehen seitlich neben dem Aufnahmeraum verlaufend je ein im wesentlichen in einen vom Kontaktsatz 3 abgewandten Bereich der Lade 7 in diese ragender, quer zur Einschubrichtung 8 federnder Haken 44 beziehungsweise 45 vorgesehen, der an seinem freien Ende, wie aus Fig .3 ersichtlich, eine Auflauffläche 46 beziehungsweise 47 zum Zusammenwirken mit dem betreffenden seitlichen Randbereich 12 beziehungsweise 13 einer Chipkarte aufweist. Die Höhe der Haken 44 und 45 ist dabei bei aus dem Abtastgerät herausgezogener Lade 7 so gewählt, daß ihre freien Enden oberhalb der betreffenden Randbereiche einer in den Aufnahmeraum innerhalb der Lade eingelegten Chipkarte liegen, wie dies aus Fig.1 ersichtlich ist. Im Zuge eines Einschiebens der Lade in das Gerät, wobei sie stufenförmig zum Niveau des Kontaktsatzes 3 hin verstellt wird, fällt dann eine sich im Aufnahmeraum innerhalb der Lade befindende Chipkarte mit ihren Randbereichen 12 beziehungsweise 13 in die Haken 44 und 45 ein. Bei diesem Vorgang wirken die seitlichen Randbereiche 12 und 13 der Chipkarte mit den an den freien Enden der Haken 44 und 45 vorgesehenen Auflaufflächen 46 und 47 zusammen, wobei die Haken 44 und 45 quer zur Einschubrichtung 8 federnd ausgelenkt werden, bis sie schließlich die bei in das Abtastgerät eingeschobener Lade sich in ihrer Betriebslage befindende Chipkarte in deren Randbereichen 12 und 13 untergreifen, wie dies aus den Figuren 2 und 3 ersichtlich ist. Im Zuge eines Herausziehens der Lade 7 aus dem Abtastgerät wird bei ihrem stufenförmigen Verstellen vom Niveau des Kontaktsatzes 3 weg die Chipkarte 2 in ihrem vom Kontaktsatz 3 abgewandten Bereich von den geräteseitigen Haken 44 und 45 im Niveau des Kontaktsatzes 3 gehalten und auf diese Weise aus dem Aufnahmeraum innerhalb der sich absenkenden Lade 7 teilweise herausgehoben. Ein solches teilweises Herausheben der Chipkarte aus dem Aufnahmeraum innerhalb der Lade bewirkt, daß sich die Chipkarte, die sich unter der Wirkung der Federeinrichtung 17 mit ihrem Randbereich 19 an den Ansätzen 14, 15 und 16 abstützt, mit ihrem Randbereich 19 von diesen Ansätzen 14, 15 und 16 löst, wonach sie unter der Wirkung der Federeinrichtung 17 entgegen der Einschubrichtung 8 teilweise aus der Lade 7 herausgeschoben wird, wie dies Fig.5 zeigt. Eine auf diese Weise aus der Lade herausgeschobene Chipkarte kann dann auf besonders einfache Weise von Hand aus ergriffen und vollständig der Lade entnommen werden. Die an den Leisten 27 und 28 vorgesehenen, dem Aufnahmeraum zugewandten, entgegen der Einschubrichtung gesehen vom Aufnahmeraum weg schräg ansteigend ausgebildeten Begrenzungsflächen derselben ermöglichen dabei ein schräg verlaufendes Herausschieben der Chipkarte aus der Lade, ohne daß ein Verbiegen der Chipkarte eintritt. Aber auch für den Fall, daß im Gegensatz zum vorliegenden Ausführungsbeispiel keine die Chipkarte 2 aus der Lade 7 herausschiebende Federeinrichtung 17 vorgesehen ist, bewirken die die Chipkarte im Zuge eines Herausziehens der Lade aus dem Gerät dabei im Niveau des Kontaktsatzes haltenden Haken 44 und 45 ein teilweises Herausheben der Chipkarte aus dem Aufnahmeraum innerhalb der Lade, wodurch an sich die Chipkarte auch leichter von Hand aus erfaßbar und vollständig der Lade entnehmbar ist, da sie nicht mehr vollständig am Boden der Lade aufliegt.

Wie aus dem Vorstehenden ersichtlich ist, wird durch die beschriebenen Maßnahmen auf konstruktiv einfache Art und Weise erreicht, daß eine Chipkarte einfach und sicher in das Abtastgerät eingeführt und auch wieder demselben entnommen werden kann, wobei weiters eine einwandfreie und sichere Kontaktierung der an der Chipkarte vorgesehenen Kontakte durch den geräteseitig feststehenden Kontaktsatz gewährleistet ist, dies ohne Verwendung eines im Gerät verstellbar angeordneten Kontaktsatzes. Auch die Handhabung eines derart ausgebildeten Abtastgerätes ist dabei einfach und betriebssicher. Aus dem Vorstehenden ist weiters ersichtlich, daß eine Reihe von Abwandlungsmöglichkeiten des beschriebenen Ausführungsbeispieles besteht, ohne daß dabei der Rahmen der Erfindung verlassen wird.

## Patentansprüche

1. Abtastgerät für eine Chipkarte (2), das einen feststehend angeordneten Kontaktsatz (3) aufweist, an den eine in eine verstellbare Aufnahmevorrichtung eingebrachte Chipkarte (2) heranführbar ist, wodurch der Kontaktsatz (3) an der Chipkarte (2) vorgesehene Kontakte kontaktiert, wobei die Aufnahmevorrichtung als niveaumäßig verstellbare Lade (7) ausgebildet ist, in die in ihrer aus dem Gerät herausgezogenen Lage die Chipkarte (2) in einen durch Anschläge (14, 15, 16) begrenzten Aufnahmeraum innerhalb der Lade (7) einlegbar ist, in dem sie innerhalb der Lade (7) niveaumäßig in Abstand zum Niveau des Kontaktsatzes liegt, und wobei für das Verstellen der Lade (7) beidseitig mit derselben zusammenwirkenden Kulissenführungen (29, 30) vorgesehen sind, welche die Lade (7) beim Einschieben in das Gerät im Bereich des Kontaktsatzes (3) stufenförmig zu dessen Niveau hin verstellen, dadurch gekennzeichnet, daß am Gerät in der Einschubrichtung (8) gesehen seitlich neben dem Aufnahmeraum verlaufend je ein im wesentlichen in einen vom Kontaktsatz (3) abgewandten Bereich der Lade (7) in diese ragender, quer zur Einschubrichtung (8) federnder Haken (44, 45) vorgesehen ist, der an seinem freien Ende eine Auflauffläche (46, 47) zum Zusammenwirken mit dem betreffenden seitlichen Randbereich (12, 13) einer Chipkarte (2) aufweist, wobei im Zuge eines Einschiebens der Lade (7) in das Gerät bei ihrem stufenförmigen Verstellen zum Niveau des Kontaktsatzes (3) hin eine in den Aufnahmeraum innerhalb der Lade (7) eingelegte Chipkarte (2) in die Haken (44, 45) einfällt und im Zuge eines Herausziehens der Lade (7) aus dem Gerät bei ihrem stufenförmigen Verstellen vom Niveau des Kontaktsatzes (3) weg die Chipkarte (2) von den Haken (44, 45) im Niveau des Kontaktsatzes (3) gehalten und dabei aus dem Aufnahmeraum innerhalb der Lade (7) zumindest teilweise herausgehoben wird.

2. Abtastgerät nach Anspruch 1, dadurch gekennzeichnet, daß zwei den Aufnahmeraum in der Einschubrichtung (8) gesehen seitlich begrenzende Anschläge durch vom dem Kontaktsatz (3) zugewandten Bereich der Lade (7) ausgehende, entlang mindestens eines Abschittes des Aufnahmeraumes verlaufende Führungsrippen (10, 11) für eine in den Aufnahmeraum innerhalb der Lade (7) einzulegende Chipkarte (2) gebildet sind, die im dem Kontaktsatz (3) zugewandten Bereich der Lade (7) ab-schittsweise mit den Aufnahmeraum übergreifenden Leisten (27, 28) versehen sind.

3. Abtastgerät nach Anspruch 2, dadurch gekennzeichnet, daß mindestens die dem Aufnahmeraum zugewandten Begrenzungsflächen (43) der Leisten (27, 28) entgegen der Einschubrichtung (8) gesehen mindestens abschittsweise vom Aufnahmeraum weg schräg ansteigend ausgebildet sind.

4. Abtastgerät nach einem der vorhergehenden Ansprüche, dadurch gekennzeichnet, daß mit einer in den Aufnahmeraum innerhalb der Lade (7) eingelegten Chipkarte (2) eine an der Lade (7) vorgesehene Federeinrichtung (17) zusammenwirkt, welche die Chipkarte (2) entgegen der Einschubrichtung (8) belastet und gegen mindestens einen den Aufnahmeraum innerhalb der Lade (7) in der zur Einschubrichtung (8) entgegengesetzten Richtung begrenzenden Anschlag (14, 15, 16) angelegt hält, von welchem sich die Chipkarte (2) im Zuge eines Herausziehens der Lade (7) aus dem Gerät durch die sie dabei im Niveau des Kontaktsatzes (3) haltenden Haken (44, 45) löst und unter der Wirkung der Federeinrichtung (17) entgegen der Einschubrichtung (8) teilweise aus der Lade (7) herausgeschoben wird.

5. Abtastgerät nach einem der vorhergehenden Ansprüche, dadurch gekennzeichnet, daß die in das Gerät eingeschobene Lade (7) durch eine geräteseitige Haltevorrichtung (32) festgehalten ist, von der sie durch Betätigung eines geräteseitig angeordneten Bedienungsorganes (34) her lösbar ist.

6. Abtastgerät nach Anspruch 5, dadurch gekennzeichnet, daß das Bedienungsorgan (34) durch den elektrischen Ein- und Ausschalter des Gerätes gebildet ist, wobei das Lösen der Lade (7) von der Haltevorrichtung (32) durch eine weitere Betätigung des Ein- und Ausschalters (34) nach dem elektrischen Ausschalten des Gerätes erfolgt.

## Claims

1. A scanning apparatus for a chip card (2) which has a fixedly arranged set of contacts (3) towards which a chip card (2) inserted into a displaceable holder can be moved, the set of contacts (3) contacting contacts provided on the chip card (2), which holder takes the form of a drawer (7) which is displaceable in level and into which the chip card (2) can be inserted into an accommodation space limited by abutment stops (14, 15, 16) inside the drawer (7) in the position of the latter in which it is withdrawn from the apparatus, in which space the card (2) is located within the drawer (7) at a certain distance in level from the level of the set of contacts, and longitudinal guide means (29, 30) are provided for adjusting the drawer (7), cooperating with it on either side, which means displace the drawer (7) stepwise upon insertion into the apparatus at the area of the set of contacts (3) towards the level thereof, characterized in that, viewed in the direction (8) of insertion, a hook (44, 45) which is resilient transversely to the direction (8) of insertion is provided on either side in the apparatus so as to extend laterally beside the accommodation space, each hook projecting essentially into said drawer (7) into a region thereof remote from the set of contacts (3) and having at its free end an ascending surface (46, 47) adapted to cooperate with the relevant lateral edge region (12, 13) of a chip card (2), while during insertion of the drawer (7) into the apparatus upon its stepwise displacement towards the level of the set of contacts (3) a chip card (2) inserted into the accommodation space within the drawer (7) enters the hooks (44, 45) and during withdrawal of the drawer (7) from the apparatus upon its stepwise displacement away from the level of the set of contacts (3) the chip card (2) is held by the hooks (44, 45) at the level of the set of contacts (3) and is at least partly lifted from the accommodation space in the drawer (7) during this.

2. A scanning apparatus as claimed in Claim 1, characterized in that two abutment stops laterally limiting the accommodation space in the direction (8) of insertion are constituted by guide ribs (10 11) for a chip card (2) to be inserted into the accommodation space within the drawer (7), extending from the region of the drawer (7) facing the set of contacts (3) along at least a portion of the accommodation space, which ribs are provided sectionwise with rims (27, 28) overlapping the accommodation space in the region of the drawer (7) facing the set of contacts (3).

3. A scanning apparatus as claimed in Claim 2, characterized int hat at least the boundary surfaces (43) of the rims (27, 28) facing the accommodation space are arranged, viewed in the direction opposite to the direction (8) of insertion, so as to extend at least sectionwise obliquely upwards away from the accommodation space.

4. A scanning apparatus as claimed in any one of the preceding Claims, characterized in that a spring device (17) provided at the drawer (7) cooperates with a chip card (2) inserted into the accommodation space within the drawer (7) and loads the chip card (2) in the direction opposite to the direction (8) of insertion and holds it against at least one abutment stop (14, 15, 16) which limits the accommodation space within the drawer (7) in the direction opposite to the direction (8) of insertion and from which the chip card (2) is released during the operation of withdrawing the drawer (7) from the apparatus by the hooks (44, 45) holding it at the level of the set of contacts (3) and is pushed partly out of the drawer (7) under the action of the spring device (17) in the direction opposite to the direction of insertion (8).

5. A scanning apparatus as claimed in any one of the preceding Claims, characterized in that the drawer (7) inserted into the apparatus is held by a holding device (32) on the side of the apparatus, from which it can be released by the actuation of an actuation member (34) arranged on the side of the apparatus.

6. A scanning apparatus as claimed in Claim 5, characterized in that the actuation member (34) is constituted by the electrical ON/OFF switch of the apparatus, the drawer (7) being released from the holding device (32) by a further actuation of the ON/OFF switch (34) after the apparatus has been switched off electrically.

## Revendications

1. Appareil de lecture pour une carte à puce (2), comportant un banc de contacts (3) fixe auquel peut être amenée une carte à puce (2) placée dans un dispositif de réception mobile, grâce à quoi le banc de contacts (3) établit le contact avec des contacts prévus sur la carte à puce (2), le dispositif de réception étant réalisé sous la forme d'un tiroir (7) déplaçable en niveau dans lequel dans sa position sortie de l'appareil, la carte à puce (2) peut être placée, dans un espace de réception délimité par des butées (14, 15, 16) à l'intérieur du tiroir (7) dans lequel elle repose, à l'intérieur du tiroir (7), en ce qui concerne le niveau, à une certaine distance du niveau du banc de contacts, et pour le déplacement du tiroir (7), sont prévues des coulisses à guidage (29, 30) qui coopérent, des deux côtés avec le tiroir et qui, lorsque le tiroir (7) est rentré dans l'appareil, le décalent par paliers, dans la zone du banc de contacts (3), vers le niveau de ce dernier, caractérisé en ce que sur l'appareil, vu dans le sens de l'introduction (8), latéralement à chaque côté de l'espace de réception, est prévu, sensiblement dans une zone du tiroir (7) opposée au banc de contacts (3), un crochet (44, 45) faisant ressort perpendiculairement à la direction d'introduction (8) et, faisant saillie dans le tiroir, qui présente, à son extrémité libre, une surface de rampe (46, 47) destinée à coopérer avec la zone marginale latérale correspondante (12, 13) d'une carte à puce (2), étant entendu qu'au cours d'une rentrée du tiroir (7) dans l'appareil, lors de son décalage par paliers jusqu'au niveau du banc de contacts, une carte à puce (2) placée dans l'espace de réception à l'intérieur du tiroir (7) se prend dans les crochets (44, 45) et, au cours d'une sortie du tiroir (7) hors de l'appareil, lors de son décalage par paliers l'éloignant du niveau du banc de contacts (3), la carte à puce (2) est retenue par les crochets (44, 45) au niveau du banc de contacts (3) et est alors soulevée, au moins en partie, hors de l'espace de réception situé à l'intérieur du tiroir (7).

2. Appareil de lecture suivant la revendication 1, caractérisé en ce que deux butées qui délimitent latéralement l'espace de réception, vu dans le sens de l'introduction (8), sont constituées par des nervures de guidage (10, 11) destinées à une carte à puce (2) à placer dans l'espace de réception à l'intérieur du tiroir (7), qui partent de la zone du tiroir (7) située du côté du banc de contacts (3), qui courent le long d'au moins une partie de l'espace de réception et qui, dans la zone du tiroir située du côté du banc de contacts (3), sont pourvues, dans certaines sections, de réglettes (27, 28) surplombant l'espace de réception.

3. Appareil de lecture suivant la revendication 2, caractérisé en ce qu'au moins les surfaces de délimitation (43) des réglettes (27, 28) tournées du côté de l'espace de réception, vues dans le sens opposé au sens d'introduction (8), sont réalisées, au moins pour certaines sections, de façon à s'élever en pente douce en s'éloignant de l'espace de réception.

4. Appareil de lecture selon l'une quelconque des revendications précédentes, caractérisé en ce qu'un dispositif à ressort (17) prévu sur le tiroir (7) agit en combinaison avec une carte à puce (2) placée dans l'espace de réception à l'intérieur du tiroir (7) et exerce sur la carte à puce (2) une force de sens opposé au sens d'introduction (8) qui la maintient appliquée contre au moins une butée (14, 15, 16) qui délimite l'espace de réception à l'intérieur du tiroir (7) dans le sens opposé au sens d'introduction (8) dont la carte à puce (2) se sépare, au cours d'une sortie du tiroir (7) de l'appareil, grâce aux crochets (44, 45) qui la maintiennent au niveau du banc de contacts (3), et est repoussée en partie hors du tiroir (7) sous l'effet du dispositif à ressort (17), dans un sens opposé au sens d'introduction (8).

5. Appareil de lecture suivant l'une quelconque des revendications précédentes, caractérisé en ce que le tiroir (7) rentré dans l'appareil est fixé par un dispositif de retenue (32) faisant partie de l'appareil dont il peut être libéré en actionnant un organe de commande (34) monté sur l'appareil.

6. Appareil de lecture suivant la revendication 5, caractérisé en ce que l'organe de commande (34) est constitué par l'interrupteur électrique Marche-Arrêt de l'appareil, la libération du tiroir (7) par le dispositif de retenue (32) s'effectuant par un nouvel actionnement de l'interrupteur Marche-Arrêt (34) après la mise hors fonction électrique de l'appareil.
